# EUROPEAN PATENT APPLICATION

(11) **EP 2 608 151 A2**
(43) Date of publication of application: **26.06.2013**
(21) Application number: 12197995.9
(22) Date of filing: 19.12.2012
(51) Int. Cl.: G06T 7/00, G06K 9/00

(54) **System for communicating relationship data associated with image characteristics**

(30) Priority: 20.12.2011 US 201113330988
(71) Applicant: HARMAN INTERNATIONAL INDUSTRIES, INCORPORATED, Northridge California 91329 (US)
(72) Inventor: Hutchings, Jeffrey L., Lehi, UT Utah 84043 (US)
(74) Representative: Bertsch, Florian Oliver

(57) **Abstract**

A low-level processing system (500) is configured to send information relating to image characteristics to a high-level analytic processing system. The low-level processing system (500) is configured to determine image characteristic values corresponding to one or more image characteristics associated with the image data. The low-level processing system is further configured to determine relationships between the image characteristic values and predetermined targets associated with the image characteristics. The predetermined targets may indicate values of the image characteristics that are desired to analytically process the image data. The relationships may indicate whether the image characteristic values match the predetermined targets. The relationships may also indicate locations outside of the predetermined targets where image characteristics do not match the predetermined targets.

## Description

### BACKGROUND OF THE INVENTION

### 1. Technical Field.

This invention relates to image processing, and more particularly to transmitting image statistics overlay streams.

### 2. Related Art.

Image and video analytics involve processes and/or algorithms that may analyze image data for statistical information, and subsequently perform one or more actions based on the analysis. The actions may include object recognition, motion detection, merging, split resolution, or occlusion, as examples. To perform the analysis or subsequent action, the analytics rely on image statistics that indicate the image or video characteristics of the image.

### SUMMARY

An analytic system may include a low-level image and/or video processing system that transmits image and image characteristic data as temporally and/or spatially correlated overlay streams in an efficient manner to a high-level image and/or video processing system. The high-level processing system may use the temporally and/or spatially correlated overlay streams to perform a high-level objective or task, such as automotive driver assistance or surveillance. The low-level processing system may determine and/or evaluate image data for image characteristics, such as luma statistics, chroma statistics, hue and saturation information, frequency characteristics, motion characteristics, edge characteristics, and/or histograms, as examples. The low-level processing system may compare results of the analysis for the image characteristics with predetermined target values or target ranges associated with the image characteristics. The predetermined target values or target ranges may demarcate portions of the image data, such as pixels or macroblocks of pixels, that have image characteristics that the high-level processing system may use or be interested in to perform the high-level processing from portions of the image data that do not have image characteristics that the high-level processing system may use or be interested in to perform the high-level processing.

If an image characteristic identified in the analysis falls within a predetermined target range associated with the image characteristic, then the low-level processing system may determine a match between the image characteristic and the predetermined target range. Alternatively, if the image characteristic identified in the analysis does not fall within the predetermined target range associated with the image characteristic, then the low-level processing system may determine a non-match between the image characteristic and the predetermined target range. Additionally, for a non-match, the low-level processing system may determine a location outside of the predetermined target range that the image characteristic falls into, such as higher than an upper bound of the target range or lower than a lower bound of the target range.

The low-level processing system may configure the match, non-match, and/or location information in match data frames and transmit the match data frames to the high-level processing system. In addition or alternatively, the low-level processing system may transmit the match data frames along with frames of the image data. The match data frames and the image data frames may be transmitted as temporally and/or spatially correlated overlay streams. The match data frames may have a size that is smaller than a size of the actual image characteristic data, which may reduce bandwidth requirements for transmitting overlay streams that comprise both image data and image characteristic data. In addition, by temporally and/or spatially correlating the image data frames and the match data frames, the high-level processing system that receives the image data frames and the match data frames may not buffer the image data frames before correlating the image data and match data frames to perform the high-level processing. Additionally, the high-level processing system may not need to implement latency correction algorithms to compensate for temporal differences between the image data frames and the match data frames. In addition or alternatively, the high-level system may not need to perform sophisticated spatial correlations between the image data frames and match data frames.

Other systems, method, features and advantages will be, or will become, apparent to one with skill in the art upon examination of the following figures and detailed description. It is intended that all such additional systems, method, features and advantages be included within this description, be within the scope of the invention, and be protected by the following claims.

### BRIEF DESCRIPTION OF THE DRAWINGS

The system may be better understood with reference to the following drawings and description. The components in the figures are not necessarily to scale, emphasis instead being placed upon illustrating the principles of the invention. Moreover, in the figures, like referenced numerals designate corresponding parts throughout the different views.

Fig. 1 is a block diagram of an example analytic system showing a low-level image processing system and a high-level processing system.

Fig. 2 is a diagram of a format of a data packet that contains match data.

Fig. 3 is a diagram of an alternative format of a data packet that contains match data.

Fig. 4A is a diagram of a second alternative format of a data packet that contains match data and a header.

Fig. 4B is a diagram of a third alternative format of a data packet that contains match data and a header.

Fig. 5 is a block diagram of an example low-level image processing system.

Fig. 6 is a flow diagram of an example method of transmitting temporally and/or spatially correlated image data and match data.

Fig. 7 is an example computer system that may represent the low-level processing system and/or the high-level processing system.

### DETAILED DESCRIPTION OF THE PREFERRED EMBODIMENTS

Image and video analytics include processes that may be used in various systems to statistically analyze captured image data. Based on the analysis, image and video analytics may perform an action or function associated with the image data, such as object detection, tracking, merge and split resolution, and/or occlusion. Using results of the action or the function that was performed, image and video analytics may further be used to perform a task or objective for which the system is being used. Example systems that may use image and/or video analytics include surveillance systems and automotive driver assistance systems. The surveillance systems may use image and video analytics to perform one or more tasks or objectives, such as monitoring for trespassing or loitering, as examples. The automotive driver assistance systems may use image and video analytics to perform one or more tasks or objectives, such as parking assist, pedestrian detection and avoidance, vehicle detection and collision avoidance; street sign detection, or surround view, as examples.

Systems that perform or use image and/or video analytics may include or be divided into two different types of processing, including a low-level processing and a high-level processing. In the low-level processing, the image data may be analyzed to determine and/or identify image characteristics associated with the image data. Image characteristics may be information about an image that may be used to perform the high-level processing. In the high-level processing, the image data and/or the image characteristics may be used to perform one or more functions or actions associated with the tasks or objectives of the system. As an example, high-level processing in a surveillance system may use the image characteristics identified in the low-level processing to perform object recognition in order to identify a trespasser in a surveillance area.

The low-level processing and the high-level processing may be performed by two different processing systems, where each processing system includes one or more processors. The two processing systems may be included in a single electronic device or apparatus, or alternatively in two different electronic devices. For example, in a surveillance system, a first processing system configured to perform the low-level processing may be a video camera that captures images of a surveillance area and/or stores the images as image data. The video camera may have one or more processors that may perform the low-level processing and determine and/or identify image characteristics associated with the captured image data. The video camera may also be configured to send the image data and the image characteristics to a second processing system. The second processing system may use the image data and the image characteristics to perform the high-level processing. Based on the results of the high-level processing, the second processing system may be configured to perform other functions or control other aspects or features of the surveillance system, such as sound an alarm. As another example, an automotive driver assistance system may be configured to identify pedestrians. The automotive driver assistance system may include a video camera that captures images at one or more locations around the vehicle. The video camera may perform the low-level processing to identify image characteristics associated with the captured images. The video camera may send the image characteristics and the image data to a second processing system located in the vehicle or at a location remote from the vehicle. The second processing system uses the image characteristics and the image data to identify pedestrians around or near the vehicle.

The image data corresponding to a captured image may be configured, sampled, and/or stored as an image frame or an image. Consecutively captured images may be configured and/or stored as consecutive image frames. The consecutively captured images may be configured together as an image stream or a video stream. Image data in an image frame may include or be divided into individual elements. An example individual element may be a pixel. The individual elements may have sizes, which may be represented as a number of bits. Examples sizes may be eight bits, sixteen bits, or twenty-four bits, although other bit sizes may be used. In addition or alternatively, the size of the individual elements may be determined by a format of the image data that having an associated sample ratio, such as 4:2:2 YUV or 4:4:4 RGB, as examples. Other image data formats and/or other sample ratios may be used to format the image data. In addition or alternatively, the size of the image data may be indicated or represented on a per element basis, such as eight bits per element or sixteen bits per element, as examples. Where the individual elements are pixels, the size of the image data may be indicated or represented on a per pixel basis, such as eight bits per pixel, or sixteen bits per pixel, as examples.

The image data, which may be referred to as raw image data, may be monochrome or color. In addition, the image data may comprise one or more components. Where the image data is monochrome, the image data may include a luma component, which may be an indication of brightness. Where the image data is color, the image data may comprise the luma component and a chrominance (also referred to as chroma) component. The chroma component, which may comprise two sub-components indicated by Cb and Cr, may be an indication of a color difference between two colors of the image or a part of the image. In addition or alternatively, the image data may comprise an alpha component, which is an indication of transparency. The alpha component may be used in various compositing or blending applications. The components of the image data may be configured on an individual element basis. For example, each individual element (e.g., pixel) of the image data may have a luma component, a chroma component, and/or an alpha component.

The image characteristics may include information about one or more captured images, which may include one or more image frames, that may be used to perform the high-level processing. In addition, the image characteristics may include information that is derived or calculated from the image data and/or one or more components of the image data (e.g., luma and/or chroma). The image characteristics may be derived or calculated on a per pixel or a per frame basis. The image characteristics may include statistical information, such as mean, variance, deviation, minimum, and maximum values of one more components of the image data. In addition or alternatively, the image characteristics include an indication, identification, or a determination of a feature in the image or a determination of a likelihood that one or more of the individual elements of the image data represent the feature in the image. Example image characteristics may include mean, deviation, variance, minimum, and maximum values for the luma and/or the chroma components. The image characteristics may also include a color image characteristic, which may be an indication of an actual color of the image or a part of the image and may be based on the chroma component and/or the luma component. The color image characteristic may be representative of hue and saturation values. In addition or alternatively, the image characteristics may include a histogram of the luma or chroma components and/or a histogram of the color image characteristic. For example, a color histogram of hue and saturation may include bins having an angle and magnitude (hue and saturation) and a count of individual elements (e.g., pixels) that correspond to each bin.

The image characteristics may also include a motion characteristic, which may be an indication of a movement of an object in the image over one or more image frames. The one or more images frames may be temporally configured as a sequence of image frames. Elements of one frame may correspond with elements of the other frames in the sequence. The motion characteristic may indicate movement over one or more elements for the frames in the sequence. Statistical information associated with the motion characteristic may include vector information that comprises magnitude and/or direction information. In addition, the image characteristics may include a frequency characteristic, which may be an indication of a change in light and dark areas of the image. The frequency characteristic may be indicative of texture in an image. The frequency characteristic may include high frequency and low frequency values, which may be indicative of a high degree or a low degree, respectively, of change in light and dark images of the image. The image characteristics may also include an edge image characteristic, which may be an indication of an edge in the image. The edge image characteristic may further indicate whether the edge is vertical, horizontal, or diagonal.

The image characteristics may be associated with the image data on an individual element basis. For example, each individual element (e.g., pixel) in an image data frame may have one or more image characteristics associated with the individual element. Alternatively, one or more image characteristics may be associated with a plurality of pixels, a group of pixels, or a block of pixels. In addition, the image characteristics may have sizes, which may be represented by a number of bits. The sizes of the different image characteristics may be the same or may vary. For example, a mean luma image characteristic may have a size that is the same as or different than a size of a motion image characteristic. Example sizes may be eight bits or sixteen bits, although other sizes may be used.

In some example systems that perform analytic processes, the processor system that is configured to perform the low-level processing may be configured to send the image characteristics along with the image data to the processor system that is configured to perform the high-level processing. Sending the image characteristics along with the image data may increase the bandwidth needed for the low-level processing system to transmit the total image information (the image data and the image characteristics) as compared to where the low-level processing system only sends the image data. For example, the image data may have a size of 16-bits per pixel, and the low-level processing system may be configured to send image characteristics associated with each of the pixels. If, for example, the system is configured to send a mean luma, a mean chroma, a color histogram, an edge characteristic, a frequency characteristic, and a motion characteristic, and assuming that each image characteristic has a size of 8-bits per pixel, then the total image characteristic size is 48 bits/pixel (i.e., 6 image characteristics each having a size of 8-bits per pixel). Consequently, sending the statistical information with the image data yields a four-fold increase (64 bits/pixel for both the image data and the image characteristic data compared to 16 bits/pixel for only the image data) in the total image information sent from the low-level processing system to the high-level processing system. In other examples, the bandwidth required may increase less than or more than the four-fold increase depending on the size of the image data and/or the size of the image characteristics. In analytic systems that use one processing system to perform the low-level processing and another processing system to perform the high-level processing, it may be desirable to reduce the size of the image characteristics in order to reduce the bandwidth constraints of the analytic system.

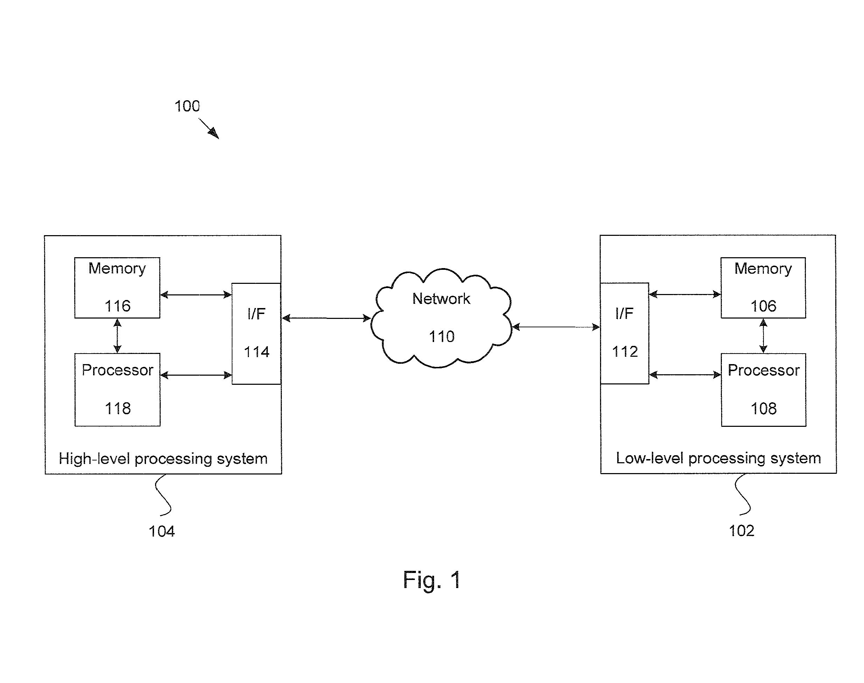

Fig. 1 illustrates an example analytic system 100 that includes a first processing system 102 that is configured to perform the low-level processing and a second processing system 104 that is configured to perform the high-level processing. The first processing system 102 may include memory 106 that is configured to store the image data. The memory 106 may include volatile or non-volatile types of memory. The first processing system 102 may also include one or more processors 108 in communication with the memory 102 that are configured to perform low-level statistical processing on the image data. The low-level statistical processing may include identifying and/or determining image characteristics associated with the image data, as previously described. The determination of the image characteristics may include determining a value of an image characteristic for the image data. The value may provide an indication of whether and/or of a likelihood that the image data has the image characteristic. As an example, the low-level processor may determine an edge value corresponding to the edge image characteristic. The edge value may provide an indication of whether and/or of a likelihood that the image data is an edge in the image.

In addition or alternatively, the low-level statistical processing may include determining and/or identifying relationships between the determined image characteristic values that correspond to the image characteristics and predetermined targets associated with the image characteristics. A predetermined target may identify and/or indicate one or more values of an image characteristic that may be desired by the high-level processor to perform analytic processing on the image data. The image data having an image characteristic value that meets and/or matches the predetermined target may be used, desired, and/or of interest to the high-level processor to perform the analytic processing on the image data. By determining the relationships between the image characteristic values and the predetermined targets, the analytic system may demarcate portions of the image data that the high-level processor may use, desire, and/or be interested in and portions of the image data that the high-level processor may not use, desire, and/or be interested in when performing the high-level analytic processing.

As an example, the high-level processor may be configured to identify trespassers in a surveillance area. In order to perform the high-level processing, the high-level processor may be interested in particular image characteristics, such as a motion image characteristic. A predetermined target associated with the motion image characteristic may indicate a motion characteristic value or a range of motion characteristic values. Portions of the image data, such as portions of corresponding elements of image frames in a sequence of image frames, having a motion characteristic value or range of values that meets or matches the predetermined target associated with the motion image characteristic may indicate motion over that portion of the image. On the other hand, portions of the image data, such as portions of corresponding elements of image frames in a sequence of image frames, having a motion characteristic value that does not meet or does not match the predetermined target associated with the motion image characteristic may not indicate motion over that portion of the image, and/or may indicate noise. Because the high-level processor is interested in knowing which parts of the image indicate motion and which parts of the image do not indicate motion in order to identify a trespasser, the predetermined target may demarcate the portions of the image data that the high-level processor may use, desire, or be interested in (i.e., the portions that indicate motion) and the image data the high-level processor may not use, desire, and/or be interested in (i.e., the portions that do not indicate motion) to determine whether there is a trespasser in the surveillance area.

One or more predetermined targets associated with one or more image characteristics may be received by the first processing system 102 and/or stored in the memory 108 of the first processing system 102. In one configuration of the analytic system 100, the first processing system 102 may receive the one or more predetermined targets from the second processing system 104. In one example, the predetermined target may comprise a single value. Alternatively, the predetermined target may be defined and/or determined by an upper bound target value or a range of upper bound target values (hereinafter collectively referred to as upper bound target value) and/or a lower bound target value or a range of lower bound target values (hereinafter collectively referred to as lower bound target value). The upper and lower bound target values may determine and/or define a target range. The target range may or may not include one or both of the upper and lower bound target values. In addition or alternatively, the target may be defined and/or determined by an optimal target value or a range of optimal target values (hereinafter collectively referred to as optimal target value) between the upper bound and lower bound values. The optimal target value may indicate an optimal or range of optimal values that the high-level processor may use and/or be interested in to perform the high-level processing.

The determination and/or identification of the relationship between the identified image characteristics and the one or more predetermined targets associated with the image characteristics may comprise determining and/or identifying whether the image characteristics are within one or more target ranges. If an image characteristic is within a target range, then the lower-level processing system may identify a match between the image characteristic value and the predetermined target. Alternatively, if the image characteristic value is not within the target range, then the lower-level processing system may identify a non-match between the image characteristic value and the predetermined target.

The lower-level processing system 102 may be configured to determine, assign, or set an indicator that indicates matches and non-matches. The indicator may be a positive indicator, indicating a match or a negative indicator, indicating a non-match. An indicator may be determined for each individual element (e.g., pixel) of an image frame, for a plurality of individual elements, for an image frame, or for a sequence of image frames. In one example configuration, the indicator may be a single indicator that may indicate whether there are matches between all of the image characteristic values and the predetermined targets associated with image characteristics. Where there are matches between all of the image characteristic values and the predetermined targets, the single indicator may be a positive indicator. Alternatively, where there is at least one non-match between an image characteristic value and the predetermined target, the single indicator may be a negative indicator. In an alternative configuration, the indicator may indicate a match between a single image characteristic value corresponding to an image characteristic and a predetermined target associated with the image characteristic. For example, if there are two image characteristics associated with the image data, such as the motion image characteristic and the edge image characteristic, then two indicators will be determined, a first indicator that indicates whether there is a match between the motion image characteristic and the predetermined target associated with the motion image characteristic, and a second indicator that indicates whether there is a match between the edge image characteristic and the predetermined target associated with the target image characteristic. Other configurations are possible. In one example, a single bit flag may be used as the indicator. For example a bit having a value of logic "1" may be a positive indicator and a bit having a value of logic "0" may be a negative indicator. Other logic value configurations, bit sizes and/or other types of indicators may be used.

One or more matches may be determined for each individual element of the image data frame. Alternatively, one or more matches may be determined for more than one individual element of the image data frame. The one or more individual elements may be referred to as a macroblock of individual elements. For example, a mean luma may be a mean of sixteen luma values of sixteen elements, such as a 4x4 macroblock of elements. A match for the mean luma may indicate that the mean luma for the 4x4 macroblock of elements matches a mean luma predetermined target. In that case, a positive indication may be assigned to each element in the 4x4 macroblock. Similarly, a non-match for the mean luma may indicate that the mean luma for the 4x4 macroblock of elements does not match the mean luma predetermined target. In that case, a negative indication may be assigned to each element in the 4x4 macroblock.

The first processing system 102 may be configured to send information indicating the matches to the second processing system 104. The first processing system 102 may send the match information as one or more of the indicators indicating the matches to the second processing system 104. The indicators may be sent to the second processing system 104 by being communicated over a network 110. The network 110 may be, include, and/or communicate through or with wide area networks (WAN), such as the Internet, local area networks (LAN), campus area networks, metropolitan area networks, or any other wireless and/or wireline networks that may allow for data communication. The network 110 may be a network that has quality of service (QoS) and/or time synchronization capabilities. The network 110 may be divided into sub-networks. The sub-networks may allow access to all of the components connected to the network 110, or the sub-networks may restrict access between the components connected to the network 110. The network 110 may be regarded as a public or private network and may include, for example, a virtual private network, an encryption, or any other security mechanism employed over the public Internet, or the like. The network 110 may be, include, and/or communicate through or with an Ethernet AVB network. The network 110 may include one or more bridges which may communicate with one or more devices communicating through and/or connected with the network. The one or more bridges may communicate with the network 110 and/or devices connected to the network through or using various protocols, such as Ethernet Audio/Video Bridging ("AVB") protocols designated by the Institute of Electrical and Electronics Engineers ("IEEE"). The first processing system 102 may include a network interface 112 in communication with the processor 108 and/or the memory 106. The network interface 110 may be configured to send the indicators over the network 110 to the second processing system 104. In addition, the network interface 110 may be configured to receive information from the second processing system 104 via the network 110. The information received from the second processing system 104 may include the image characteristics that the first processing system 102 is to identify and/or determine matches for when analyzing the image data. The information received from the second processing system 104 may also include the predetermined targets associated with the image characteristics that the first processing system 102 may use to determine the matches.

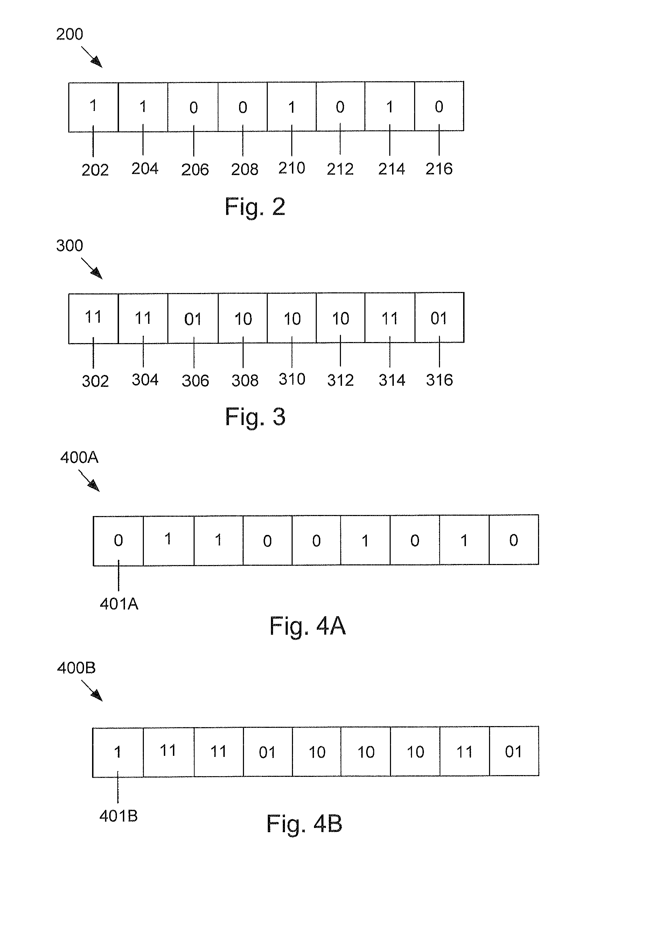

Fig. 2 illustrates an example format 200 of image characteristic data that includes the indicators, which may be sent over the network. The image characteristic data corresponds to one or more individual elements (e.g., pixels) of an image frame. As shown in Fig. 2, the image characteristic data may be arranged and/or configured in a two dimensional array that has the same dimensions as the corresponding image frame. The format 200 includes a number of data fields that is equal to a number of image characteristics for which the first processing system 102 is to determine matches. Each data field includes an indicator that indicates a match or a non-match between an image characteristic and a predetermined target associated with the image characteristic. In Fig. 2, the example format 200 shows eight data fields, which may include eight indicators to indicate a match or a non-match for eight image characteristics. As explained above, the eight image characteristics are formatted, included, and/or packed into a single array, which may be indicative of an image characteristic data value, that corresponds, one-to-one, with an individual element (e.g., pixels) of an image frame. As an example, a first data field 202 may indicate a match or a non-match for a vertical edge characteristic of a pixel in an image frame; a second data field 204 may indicate a match or a non-match for a horizontal edge characteristic of the pixel; a third data field 206 may indicate a match or a non-match for a motion characteristic of the pixel; a fourth data field 208 may indicate a match or a non-match for a high frequency characteristic of the pixel; a fifth data field 210 may indicate a match or a non-match for a low frequency characteristic of the pixel; a sixth data field 212 that may indicate a match or a non-match for a mean Cb chroma characteristic of the pixel; a seventh data field 214 that my indicate a match or a non-match for a mean Cr chroma characteristic of the pixel, and an eighth data field 216 that may indicate a match or a non-match for a mean luma characteristic of the pixel. More or fewer data fields may be included in the format 200 depending on the number of image characteristics that are being analyzed by the first processing system 102. As shown in Fig. 2, single bit flags may be used to indicate a match or a non-match. In the format 200, a logic "1" is used to indicate a match and a logic "0" is used to indicate a non-match. Other types of indicators may be used to indicate matches and non-matches, as previously described. If one-bit indicators are used in the data fields of the format 200, the size of the image characteristic data that is transmitted from the first processing system 102 to the second processing system 104 is greatly reduced, as compared to if the actual image characteristic data is transmitted. For example, as previously described, an image characteristic may comprise a size of 8-bits. If one-bit indicators indicating matches and non-matches are transmitted instead of the image characteristics, an eight-fold reduction in the amount of image characteristic data that is transmitted is achieved.

In alternative configurations, the determination and/or identification of the relationship between the image characteristics and the one or more predetermined targets associated with the image characteristics may further include, if a non-match is determined, determining and/or identifying a location of the image characteristic outside of the predetermined target, such as outside of the target range. The location may be a quantitative location that is greater than or less than the target values of the target range. For example, the lower processing system 102 may determine whether the image characteristic is higher than an upper bound target value or lower than the lower bound target value. For a non-match, determining a location of the image characteristic outside of the predetermined target (e.g., outside of the target range) may assist the high-level processing system 104 to tune its image characteristic or statistical gathering functions or function ranges. For example, if the high-level processing system 104 is configured to identify individual elements of image data having a particular range of color, receiving information from the low-level processing system 102 that indicates the location outside of the target range for non-matches may enable the high-level processing system 104 to determine the direction to move its statistical match function range. Accordingly, in the alternative configuration, the first processing system 102 may be configured to determine a match or a non-match between an image characteristic value and a predetermined target, and if there is a non-match, to determine the location of the image characteristic outside of the predetermined target range (e.g., outside of the target range).

The lower-level processing system 102 may be configured to determine, assign, or set an indicator that indicates matches and non-matches and further indicates a location outside of the target range for non-matches. In one example, the indicator may comprise two bits. A "11" bit combination may be assigned to the indicator to indicate a match between the image characteristic and a predetermined target associated with the image characteristic. A "01" bit combination may be assigned to the indicator to indicate a non-match between the image characteristic and the predetermined target, and may further indicate that the image characteristic is lower than the lower bound target value. A "10" bit combination may be assigned to the indicator to indicate a non-match between the image characteristic and the predetermined target, and may further indicate that the image characteristic is higher than the upper bound target value. A "00" bit combination may be assigned to the indicator to indicate a non-match, and may not be indicative of a location outside of the target range that the image characteristic falls. Other types of indicators, other numbers of bits, or other bit combinations may be used to indicate matches, non-matches, and locations outside of the target range for non-matches.

Fig. 3 shows a second example data format 300 of image characteristic data that includes the indicators, which may be sent over the network. Similar to the data format 200, the image characteristic data may be arranged and/or configured in a two-dimensional array that has the same dimensions as a corresponding image frame. Also, a number of data fields in the data format 300 is equal to a number of image characteristics for which the first processing system 102 is to determine matches. For example, the data format 300 may include eight data fields 302-316. Each data field 302-316 may include an indicator for one of eight different image characteristics. More or fewer data fields may be included in the data format, depending on the number of image characteristics for which the first image processing system 102 is to analyze. The indicators may indicate a match or a non-match for the indicators, and for non-matches, may also indicate a location outside of the target range. The indicators may comprise two-bits, as previously described. Even if two-bit indicators are used, instead of the one-bit indicators included in the data fields of the format 200, the size of the image characteristic data that is transmitted from the first processing system 102 to the second processing system 104 is greatly reduced, as compared to if the actual image characteristic data is transmitted. For example, as previously described, an image characteristic may comprise a size of 8-bits. If two-bit indicators indicating matches, non-matches, and locations of the non-matches are transmitted instead of the image characteristics, a four-fold reduction in the amount of image characteristic data that is transmitted may be achieved.

The data format 200 and/or the data format 300 may not include an indicator-type data field, such as an indicator-type header, that indicates a type of indicator that is being sent from the first processing system 102 to the second processing system 104. The data format 200 and/or the data format 300 may not include an indicator-type data field when the second processing system 104 knows the type of indicators that the first processing system 102 is sending. Because the second processing system 104 knows the type of indicators that are being sent, the second processing system 104 may to process the image characteristic data without the image characteristic data containing indicator-type data fields. For example, if the second processing system 104 knows that the first processing system 102 is configured to send one-bit indicators indicating matches and non-matches, but not two-bit indicators indicating both matches/non-matches and locations of the non-matches, then the image characteristic data being transmitted may not comprise an indicator-type data field. Similarly, if the second processing system 104 knows that the first processing system 102 is configured to send two-bit indicators indicating both match/non-matches and locations of the non-matches, but not one-bit indicators indicating only match/non-match information, then the image characteristic data being transmitted may not comprise an indicator-type data field.

In alternative configurations, the second processing system 104 may not know the type of indicators that the first processing system 102 is transmitting. For example, the first processing system 102 may be configured to transmit either one-bit indicators or two-bit indicators. The second processing system 104 may not know whether the image characteristic data contain the one-bit indicators or the two-bit indicators prior to receiving the image characteristic data. In these alternative configurations, the data format for the image characteristic data may include an indicator-type data field, such as an indicator-type header, that indicates a type of indicator that is being transmitted. For example, the indicator-type data field may include an indicator-type flag that indicates that one-bit indicators (i.e., indicators indicating only match/non-match information) are being transmitted, or alternatively, that indicates that two-bit indicators (i.e., indicators indicating both match/non-match, and non-match location information) are being transmitted. In one example, a single bit flag may be used, where one logic value (e.g., logic "1" or logic "0") indicates that one-bit indicators are being transmitted, and the other logic value indicates that two-bit indicators are being transmitted.

Figs. 4A and 4B show example data formats 400A and 400B, respectively, for image characteristic data that includes one or more indicators, and that further includes indicator-type data fields 401A, 401B, respectively. Similar to formats 200 and 300, the image characteristic data shown in Figs. 4A and 4B may be arranged and/or configured in a two-dimensional array that has the same dimensions as a corresponding image frame. In the example data formats 400A and 400B, the indicator type data fields 401A, 401B are indicator-type headers. However, the indicator-type data fields may be configured in other parts of the data formats 400A and 400B. As shown in Fig. 4A, a first single-bit flag, for example a single bit flag having a logic value "0", may be used to indicate that only match and non-match information is being transmitted. Alternatively, as shown in Fig. 4B, a second single-bit flag, such as a single bit flag having a logic value "1 ", may be used to indicate that both match/non-match and location information of the non-matches are being transmitted. Other types of header indicators and/or different logic values may be used to indicate the different types of match information that is being transmitted.

Referring back to Fig. 1, the second processing system 104 may receive the image data and the match, non-match, and/or location information associated with the image data from the first processing system 102 over the network 110. The second processing system 104 may include a network interface 114 that is configured to communicate over the network 110 and receive the image data and the match, non-match, and/or location information. The second processing system 104 may further include memory 116 that may store the image data and the match, non-match, and/or location information. The second processing system 104 may also include one or more processors 118 that may be configured to perform the high-level processing using the image data and the match, non-match, and/or the location information.

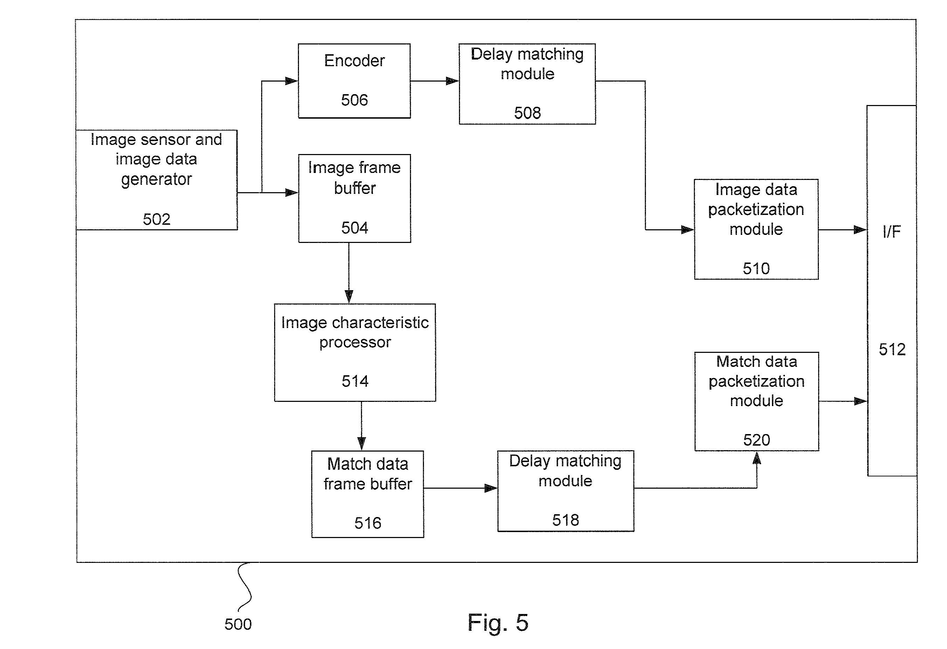

Fig. 5 illustrates an example low-level analytic processing system 500. The low-level processing system 500 may include an image sensor and image data generator module 502 (e.g., image sensor processor) that may be configured to capture images and generate demosaiced, pixel corrected and processed (e.g., noise-reduced) image data. The image sensor and image data generator module 502 may be configured to output the image data to an image frame buffer 504 and/or an encoder 506 (e.g., a H.264 encoder). The encoder 506 may be configured to encode the image data and output the encoded image data to a delay matching module 508. The delay matching module 508 may be configured to compensate for latency differences between the image data and the match data so that the image data and the match data are temporally correlated when transmitted to a high-level processing system.

Where the image data and the match data are temporally correlated, the image data and the match data are sent to the high-level processing system so that the high-level processing system may process received image frames for the match data without any effects of delay or latency. By temporally correlating the image data and the mismatch data, any mismatch in time between the image data and the match data that may result due to delays in processing at the high-level processing system may be compensated for before the image data and the match data is transmitted to the high-level processing system. Alternatively, the high-level processing system may compensate for any latency after the image data and the match data is received by the high-level processing system. However, due to variation delays or delays that are longer than a single frame, compensating for latency at the end of the high-level processing system may be difficult. By temporally correlating the image data and the match data at the end of the low-level processing system prior to sending the image data and the match data, any need to compensate for delays that may cause uncorrelation between the image data and the match data may be eliminated or avoided.

The delay matching module 508 may output the temporally correlated image data to an image data packetization module 510. The image data packetization module 510 may be configured to format the image data into a stream of packets containing image data frames (i.e., a video stream) and output the stream to a network interface module 512. The network interface module 512 may be configured to send the stream over a network to a high-level processing system.

The image buffer frame 504 may be configured to buffer the image data output from the image sensor and image data generator module 502 before the image data is sent to one or more image characteristic processing modules 514. The image buffer frame 504 may buffer the image data in order to analyze the image data for motion image characteristics due to the temporal nature of analyzing the image data for motion. In alternative embodiments, if the low-level processing system 500 is not configured to analyze the image data for motion image characteristics, the image buffer frame may not be included in the low-level processing system 500.

The one or more image characteristic processing modules 514 may be configured to process the image data to determine and/or identify one or more image characteristics that may be associated with the image data. The one or more image characteristic processing modules 514 may be configured to process the image data on an individual element (e.g., a pixel) basis or on a macroblock basis. The one or more image characteristic processing modules 514 may further be configured to determine relationships, such as matches and/or non-matches, between image characteristic values corresponding to the image characteristics and predetermined targets associated with the image characteristics, as previously described. Additionally, the one or more image characteristic processing modules 514 may be configured to determine locations outside of the target range for the non-matches, as previously described.

In addition, the characteristic processing modules 514 may be configured to spatially correlate the match data with the image data. The image data may be arranged and/or configured in a two-dimensional image data frame, with each element of the image data having a unique location (e.g., coordinate) in the image data frame. Similarly, match data may be arranged and/or configured in a two-dimensional match data frame, with each element of the match data having a unique location (e.g., coordinate) in the match data frame. Where the image data and the corresponding match data are spatially correlated, each element of match data has a location (e.g., coordinate) in the match data frame that is the same as the location (e.g., coordinate) of the image data in the image data frame to which the match data corresponds. That is, the match data frame may be overlayed on top of the image data frame for all of the elements of the image data frame and the match data frame.

To illustrate, image data may be contained in a two dimensional image data frame with dimensions R and C, where R represents a number of horizontal lines in the image data frame, and C represents a number of vertical columns in the image data frame. The number of elements (e.g., pixels) in the image data frame is equal to R x C. Each element (e.g., pixel) in the image data frame may have a location that is uniquely defined by a coordinate. Each coordinate may be defined as a point *(r,c)* in the two dimensional image frame designated by a monotonically increasing integer value (from the left edge of the frame to the right edge of the frame) from zero to R-1 indicating the horizontal location of the pixel, and by a monotonically increasing integer value (from the top edge of the frame to the bottom edge of the frame) from zero to C-1 indicating the vertical location of the pixel. For example, the top left corner pixel has the coordinate (0,0), and the bottom right corner pixel would have the coordinate (R-1, C-1).

Similarly, match data corresponding to the image data may be contained in a two dimensional match data frame with dimensions Rm and Cm, where Rm represents the number of horizontal lines in the match data frame, and Cm represents the number of vertical columns in the match data frame. The number of image match data elements or values is equal to Rm x Cm. Additionally, Rm may be equal to R and Cm may by equal to C, indicating that the number of image match data elements is equal to the number if image data elements, and that the image data frames and image match data frames have the same dimensions. Each match data element or value in the match data frame may have a location that is uniquely defined by a coordinate. Each coordinate may be defined as a point *(rm,cm)* in the two dimensional match data frame designated by a monotonically increasing integer value (from the left edge of the frame to the right edge of the frame) from zero to Rm-1 indicating the horizontal location of the pixel, and a monotonically increasing integer value (from the top edge of the frame to the bottom edge of the frame) from zero to Cm-1 indicating the vertical location of the pixel. For example, the top left corner image match data value may have the coordinate (0,0). The bottom right corner pixel may have the coordinate (Rm-1, Cm-1).

The image data frame elements (pixels), and match data elements may be spatially correlated where the image match data frame is overlayed on top of the image data frame, and where for all of the elements of the image data frame configured in the coordinates (r, c) and for all of the elements of the match data frame configured in the coordinates (rm,cm), r is equal to rm, and c is equal to cm. For example, for the image data having coordinates (0,0), the corresponding match data also has coordinates (0,0). The one-to-one spatial relationship may be present for all elements in both the image data frame and match data frame.

The match data may be spatially correlated with the image data where the image data frames and match data frames are configured as arrays of macroblocks with dimensions N x M, where the macroblocks use the same coordinate relationships, definitions and constraints as the individual elements that make up the macroblocks. To illustrate, if the macroblocks are defined as NxM elements, then the match data frame and image data frame will consist of Rm/N x Cm/M and R/N x C/M macroblocks, respectively. The coordinates of each macroblock will correspond, one-to-one, between the image data and match data frames as the relationship is unchanged by the integer division of the frames in to macroblocks.

When the high-level processing system receives the image data and the match data as temporally and/or spatially correlated data, the high-level processing system may more efficiently identify the frames containing match data that correspond to the image data frames, and as a result, may more efficiently perform the high-level processing. For example, temporal correlation between image match data elements and image data elements (pixels) may eliminate the need for the high level processing system to incorporate latency adjustments when calculating moving object trajectories, resolving occlusions and merges and splits. Additionally, providing spatially correlated match data and image data to the high-level processing system may eliminate the need for the high-level processing system to perform sophisticated correlation algorithms that are computationally intensive.

The one or more image characteristic processing modules 514 may be configured to output the match data in a rasterized frame format that is similar to a frame format of the image data. The match data in the rasterized format may be spatially correlated with the image data in the rasterized format. The rasterized match data may be output to a match data frame buffer 516 where the rasterized data is buffered until an entire frame of match data is ready to be transmitted.

When the entire frame of match data is ready to be transmitted, the match data frame buffer may be configured to output the match data to a delay matching module 518, which may operate cooperatively with the delay matching module 508 and compensate for latency differences between the image data and the match data so that the image data and the match data are temporally correlated, as described above. In other example low-level processing systems, the delay matching module 508 and the delay matching module 518 may be a single delay matching module that is configured to receive both the image data and the matching data and output the image data and the matching data as temporally correlated data. The delay matching module 518 may be configured to output the temporally correlated match data to a match data packetization module 520. The match data packetization module 520 may be configured to format the match data into match data frames as described with reference to Figs. 2, 3, 4A and/or 4B. The match data packetization module 520 may further be configured to output the match data frames to the network interface module 512. The network interface module 512 may be configured to output the match data frames and the image data frames as two separate overlay streams that are temporally and/or spatially correlated with each other, over the network and to the high-level processing system.

Where the image data and the match data are temporally and/or spatially transmitted over the network, the image data and the match data may both be in an uncompressed format. If the image data were in a compressed data format but the match data were in an uncompressed format, the high-level processing system may buffer an entire decoded frame before spatially and/or temporally correlating an image data frame and a match data frame. On the other hand, where both the image data and the match data are transmitted in an uncompressed format and in a spatial and/or temporal manner, the high-level processing system may process the image data and the match data without performing any buffering to correlate the image data and the match data.

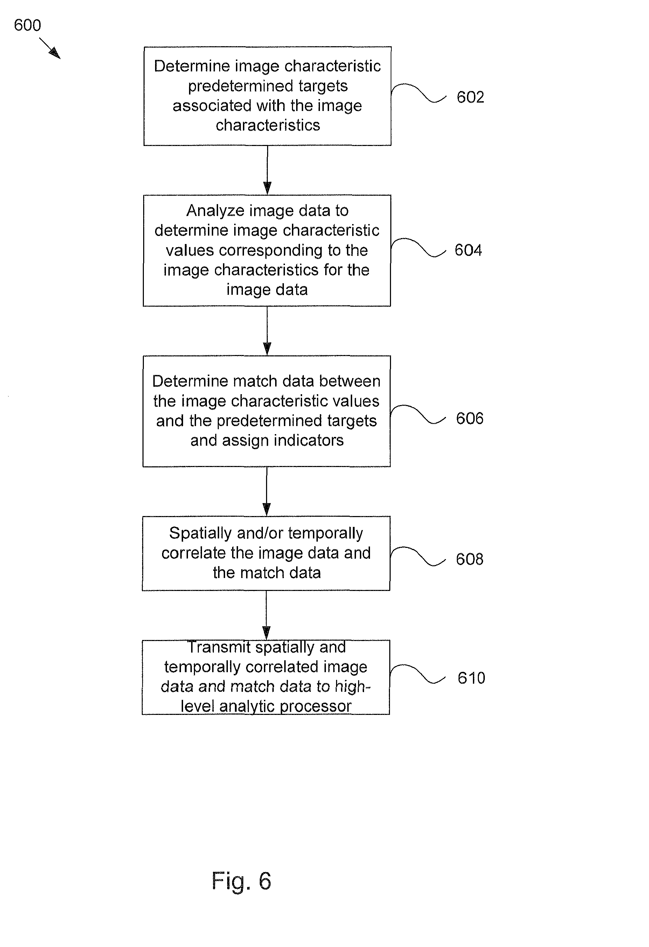

Fig. 6 illustrates an example method 600 for transmitting spatially and/or temporally correlated image data frames and match data frames from a low-level processing system to a high-level processing system. At block 602, the low-level processing system may determine one or more image characteristics for which the low-level processing system is to analyze the image data. Also, at block 602, the low-level processing system may determine and/or identify one or more predetermined targets associated with the one or more image characteristics. At block 604, the low-level processing system may analyze the image data to determine and/or identify the one or more image characteristics. As previously described, the analysis may be performed on a per individual element basis and/or on a macroblock basis. The analysis may include a statistical analysis of one or more components of the image data and/or a determination or evaluation of whether the individual elements or macroblocks comprise the image characteristics. Results of the analysis may be in the form of one or more values indicative of the determination or the evaluation that may be compared to the predetermined targets. At block 606, the low-level processing system may determine match data indicative of a match, a non-match, and/or a location outside of the target range by comparing the results of the analysis determined at block 604 with the predetermined targets. Also, at block 606, the low-level processing system may be configured to assign indicators that are indicative of the match data. At block 608, the low-level processing system may be configured to spatially and/or temporally correlate the image data and the match data. Also, at block 608, the low-level processing system may be configured to packetize the image data and the match data into respective image data frames and match data frames. The match data may be formatted in one of the data frame formats as previously described with reference to Figs. 2, 3, 4A, and/or 4B. At block 610, the low-level processing system may be configured to transmit the image data frames and match data frames as spatially and/or temporally correlated image data and match data overlay streams over a network and to a high-level processing system. In some examples, the low-level processing system and the high-level processing are part of two different apparatuses or electronic devices. In other examples, the low-level processing system and the high-level processing system are part of the same apparatus or electronic device.

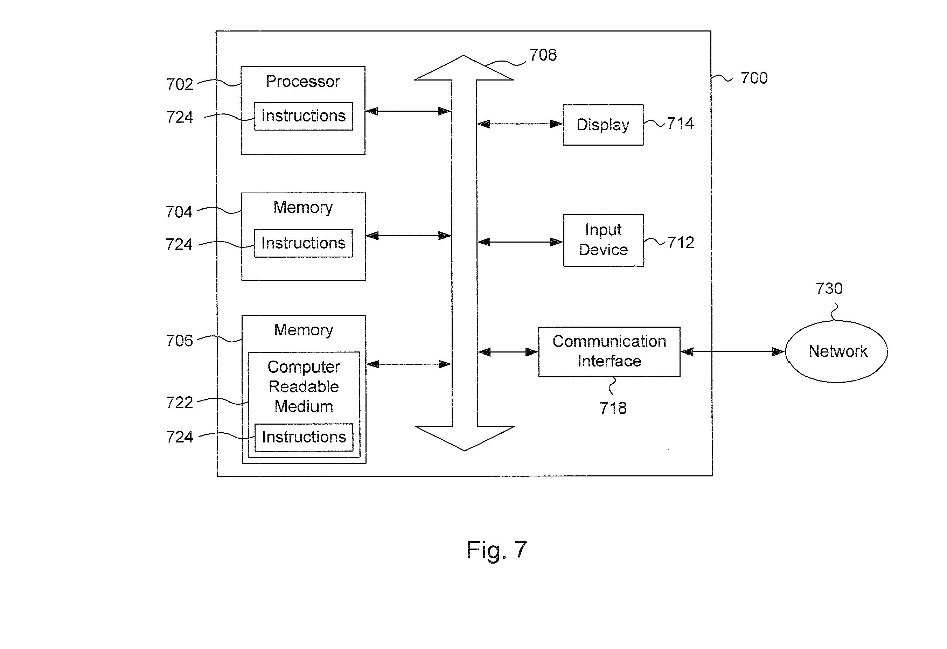

Fig. 7 illustrates a general computer system 700, which may represent a low-level processing system and/or a high-level processing system. The computer system 700 may include a set of instructions 724 that may be executed to cause the computer system 700 to perform any one or more of the methods or computer based functions disclosed herein. The computer system 700 may operate as a standalone device or may be connected, e.g., using a network, to other computer systems or peripheral devices.

In a networked deployment, the computer system may operate in the capacity of a server or as a client user computer in a server-client user network environment, or as a peer computer system in a peer-to-peer (or distributed) network environment. The computer system 700 may also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a smart camera, a video camera, a scanner, a facsimile machine, a printer, a pager, a personal trusted device, a web appliance, a network router, switch or bridge, or any other machine capable of executing a set of instructions 724 (sequential or otherwise) that specify actions to be taken by that machine. In a particular embodiment, the computer system 700 may be implemented using electronic devices that provide voice, video or data communication. Further, while a single computer system 700 may be illustrated, the term "system" shall also be taken to include any collection of systems or sub-systems that individually or jointly execute a set, or multiple sets, of instructions to perform one or more computer functions.

As illustrated in Fig. 7, the computer system 700 may include a processor 702, such as, a central processing unit (CPU), a graphics processing unit (GPU), or both. The processor 702 may be a component in a variety of systems. For example, the processor 702 may be part of a standard personal computer or a workstation. The processor 702 may be one or more general processors, digital signal processors, application specific integrated circuits, field programmable gate arrays, servers, networks, digital circuits, analog circuits, combinations thereof, or other now known or later developed devices for analyzing and processing data. The processor 702 may implement a software program, such as code generated manually (i.e., programmed).

The computer system 700 may include a memory 704 that can communicate via a bus 708. The memory 704 may be a main memory, a static memory, or a dynamic memory. The memory 704 may include, but may not be limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one case, the memory 704 may include a cache or random access memory for the processor 702. Alternatively or in addition, the memory 704 may be separate from the processor 702, such as a cache memory of a processor, the system memory, or other memory. The memory 704 may be an external storage device or database for storing data. Examples may include a hard drive, compact disc ("CD"), digital video disc ("DVD"), memory card, memory stick, floppy disc, universal serial bus ("USB") memory device, or any other device operative to store data. The memory 704 may be operable to store instructions 724 executable by the processor 702. The functions, acts or tasks illustrated in the figures or described herein may be performed by the programmed processor 702 executing the instructions 724 stored in the memory 704. The functions, acts or tasks may be independent of the particular type of instructions set, storage media, processor or processing strategy and may be performed by software, hardware, integrated circuits, firm-ware, micro-code and the like, operating alone or in combination. Likewise, processing strategies may include multiprocessing, multitasking, parallel processing and the like.

The computer system 700 may further include a display 714, such as a liquid crystal display (LCD), an organic light emitting diode (OLED), a flat panel display, a solid state display, a cathode ray tube (CRT), a projector, a printer or other now known or later developed display device for outputting determined information. The display 714 may act as an interface for the user to see the functioning of the processor 702, or specifically as an interface with the software stored in the memory 704 or in the drive unit 706.

Additionally, the computer system 700 may include an input device 712 configured to allow a user to interact with any of the components of system 700. The input device 712 may be a number pad, a keyboard, or a cursor control device, such as a mouse, or a joystick, touch screen display, remote control or any other device operative to interact with the system 700.

The computer system 700 may also include a disk or optical drive unit 706. The disk drive unit 706 may include a computer-readable medium 722 in which one or more sets of instructions 724, e.g. software, can be embedded. The computer-readable medium 722 may be a non-transitory computer-readable medium, a computer-readable storage medium, and/or a combination thereof. Further, the instructions 724 may perform one or more of the methods or logic as described herein. The instructions 724 may reside completely, or at least partially, within the memory 704 and/or within the processor 702 during execution by the computer system 700. The memory 704 and the processor 702 also may include computer-readable media as discussed above.

The present disclosure contemplates a computer-readable medium 722 that includes instructions 724 or receives and executes instructions 724 responsive to a propagated signal; so that a device connected to a network 730 may communicate voice, video, audio, images or any other data over the network 730. Further, the instructions 724 may be transmitted or received over the network 730 via a communication interface 718. The communication interface 718 may be a part of the processor 702 or may be a separate component. The communication interface 718 may be created in software or may be a physical connection in hardware. The communication interface 718 may be configured to connect with a network 730, external media, the display 714, or any other components in system 700, or combinations thereof. The connection with the network 730 may be a physical connection, such as a wired Ethernet connection or may be established wirelessly as discussed below. Likewise, the additional connections with other components of the system 700 may be physical connections or may be established wirelessly. In the case of a service provider server, the service provider server may communicate with users through the communication interface 718.

The network 730 may include wired networks, wireless networks, or combinations thereof. The wireless network may be a cellular telephone network, an 802.11, 802.16, 802.20, or WiMax network. Further, the network 730 may be a public network, such as the Internet, a private network, such as an intranet, or combinations thereof, and may utilize a variety of networking protocols now available or later developed including, but not limited to TCP/IP based networking protocols.

The computer-readable medium 722 may be a single medium, or the computer-readable medium 722 may be a single medium or multiple media, such as a centralized or distributed database, and/or associated caches and servers that store one or more sets of instructions. The term "computer-readable medium" may also include any medium that may be capable of storing, encoding or carrying a set of instructions for execution by a processor or that may cause a computer system to perform any one or more of the methods or operations disclosed herein. In addition or alternatively, the computer-readable medium 722 may be a computer-readable storage medium and/or a non-transitory computer-readable medium.

The computer-readable medium 722 may include a solid-state memory such as a memory card or other package that houses one or more non-volatile read-only memories. The computer-readable medium 722 also may be a random access memory or other volatile re-writable memory. Additionally, the computer-readable medium 722 may include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that may be a tangible storage medium. Accordingly, the disclosure may be considered to include any one or more of a computer-readable medium or a distribution medium and other equivalents and successor media, in which data or instructions may be stored.

Alternatively or in addition, dedicated hardware implementations, such as application specific integrated circuits, programmable logic arrays and other hardware devices, may be constructed to implement one or more of the methods described herein. Applications that may include the apparatus and systems of various embodiments may broadly include a variety of electronic and computer systems. One or more embodiments described herein may implement functions using two or more specific interconnected hardware modules or devices with related control and data signals that may be communicated between and through the modules, or as portions of an application-specific integrated circuit. Accordingly, the present system may encompass software, firmware, and hardware implementations. The modules, as described above with reference to Fig. 5 may be software modules, firmware modules, hardware modules, or a combination thereof. The modules may be stored in memory and/or executable by a processor.

The methods described herein may be implemented by software programs executable by a computer system. Further, implementations may include distributed processing, component/object distributed processing, and parallel processing. Alternatively or in addition, virtual computer system processing maybe constructed to implement one or more of the methods or functionality as described herein.

Although components and functions are described that may be implemented in particular embodiments with reference to particular standards and protocols, the components and functions are not limited to such standards and protocols. For example, standards for Internet and other packet switched network transmission (e.g., TCP/IP, UDP/IP, HTML, HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

1. A method of performing analytic processing, the method comprising:
determining, with at least one processor, an image characteristic value corresponding to an image characteristic, the image characteristic being associated with image data; and
determining, with the at least one processor, a relationship between the image characteristic value and a predetermined target associated with the image characteristic, the predetermined target indicating one or more values of the image characteristic that is desired to analytically process the image data.

2. The method of claim 1, where the predetermined target comprises a range determined by one or more upper bound values and one or more lower bound values.

3. The method according to any of claims 1 or 2, where determining the relationship between the image characteristic value and the predetermined target associated with the image characteristic comprises determining, with the at least one processor, whether the image characteristic value matches the predetermined target,
where, in response to the relationship between the image characteristic value and the predetermined target comprising a non-match, determining the relationship between the image characteristic value and the predetermined target further comprises:
determining, with the at least one processor, a location of the image characteristic value outside of the predetermined target.

4. The method of claim 3, further comprising:
generating, with the at least one processor, an indicator that indicates whether the image characteristic value matches the predetermined target.

5. The method according to any of the preceding claims, further comprising:
determining, with the at least one processor, a plurality of image characteristic values corresponding to a plurality of image characteristics, the plurality of image characteristics being associated with the image data;
determining, with the at least one processor, a plurality of relationships between the plurality of image characteristic values and a plurality of predetermined targets corresponding to the plurality of image characteristics; and
generating, with the at least one processor, at least one indicator indicating the plurality of relationships between the plurality of image characteristic values and the plurality of predetermined targets,
where generating the at least one indicator comprises generating, with the at least one processor, a plurality of indicators, each indicator of the plurality of indicators corresponding to each relationship of the plurality of relationships.

6. The method according to any of the preceding claims, further comprising:
determining, with the at least one processor, a plurality of image characteristic values corresponding to a plurality of image characteristics, the plurality of image characteristics being associated with the image data;
determining, with the at least one processor, a plurality of relationships between the plurality of image characteristic values and a plurality of predetermined targets corresponding to the plurality of image characteristics; and
generating, with the at least one processor, at least one indicator indicating the plurality of relationships between the plurality of image characteristic values and the plurality of predetermined targets,
where generating the at least one indicator comprises generating a single indicator,
where the single indicator indicates a match between the plurality of image characteristic values and the plurality of predetermined targets if all of the plurality of relationships indicate a match between the plurality of image characteristics and the plurality of predetermined targets, and
where the single indicator indicates a non-match between the plurality of image characteristic values and the plurality of predetermined targets if at least one relationship of the plurality of relationships indicates a non-match between an image characteristic value corresponding to one of the plurality of image characteristics and a predetermined target associated with the one of the plurality of image characteristics.

7. The method according to any of claims 1 to 6, further comprising:
sending, with the at least one processor, the image data and data indicating the relationship between the image characteristic value and the predetermined target to a processing system that is configured to perform high-level analytic image processing,
where sending the image data and the data indicating the relationship between the image characteristic value and the predetermined target comprises sending, with the at least one processor, the image data and the data indicating the relationship between the image characteristic value and the predetermined target in a spatially and temporally correlated manner.

8. A low-level analytic processing system (102, 500) configured to send information relating to image characteristics to a high-level analytic processing system (104), the low-level processing system (500) comprising a plurality of modules executable by at least one processor, the plurality of modules comprising:
an image sensor and image data generator module (502) that is configured to capture images and generate image data;
a memory module (504) that is configured to store the image data; and
at least one image characteristic processing module (514) configured to:
determine image characteristic values corresponding to an image characteristic, the image characteristic being associated with the image data; and
determine relationships between the image characteristic values and a predetermined target associated with the image characteristic, the predetermined target indicating one or more values of the image characteristic that is desired to analytically process the image data.

9. The low-level analytic processing system (500) of claim 8, where the predetermined target comprises a range determined by one or more upper bound values and one or more lower bound values.

10. The low-level analytic processing system (102, 500) according to any of claims 8 or 9, where the plurality of modules further comprises at least one packetization module (520) configured to:
format the image data into a stream of image data frames; and
format data indicating the relationships between the image characteristic values and the predetermined target into a stream of image characteristic data frames.

11. The low-level analytic processing system (500) according to any of claims 8 to 10, where the plurality of modules further comprises:
at least one delay matching module (508) configured to temporally correlate the stream of image data frames and the stream of image characteristic data frames.

12. The low-level analytic processing system according to any of claims 8 to 11, where the plurality of modules further comprises:
a network interface module (512) that is configured to transmit the stream of image data frames and the stream of image characteristic data frames over a network to the high-level analytic processing system.

13. The low-level analytic processing system (500) according to any of claims 8 to 12, where the determination of the relationships between the image characteristic values and the predetermined target associated with the image characteristic comprises a determination of whether the image characteristic values match the predetermined target.

14. The low-level analytic processing system (500) of claim 13, where the at least one image characteristic processing module (514) is further configured to:
for non-matches between image characteristic values and the predetermined target, determine locations of the image characteristic values outside of the predetermined target.
